# FASCICULE DE BREVET EUROPEEN

(11) **EP 0 717 511 B1**
(45) Date de publication et mention de la délivrance du brevet: **11.09.2002**
(21) Numéro de dépôt: 95203315.7
(22) Date de dépôt: 01.12.1995
(51) Int. Cl.: H04B 7/26

(54) **Système de radio-communication permettant de gérer des retards de transmission variables**
Radiokommunikationsanordnung mit Verwaltung veränderbarer Übertragungsverzögerungen
Radiocommunication system with control of variable transmission delays

(30) Priorité: 14.12.1994 FR 9415071
(43) Date de publication de la demande: 19.06.1996
(73) Titulaire: Koninklijke Philips Electronics N.V., 5621 BA Eindhoven (NL)
(72) Inventeur: Bellec, Martial, F-75008 Paris (FR)
(74) Mandataire: Chaffraix, Jean

(56) Documents cités:
- EP-A- 0 540 808
- EP-A- 0 587 225
- WO-A-91/10305
- FR-A- 2 697 956

## Description

L'invention concerne un système de radio-communications qui comporte au moins un terminal synchronisé avec une station radio pour lui transmettre des trames radio qui contiennent des informations dont notamment un mot de préambule et qui arrivent à la station radio avec un retard inférieur à une certaine limite, ladite station radio comportant un circuit d'estimation de la composante continue des trames radio reçues, cette estimation étant utilisée comme seuil de décision par la station radio pour attribuer une valeur aux informations reçues.

L'invention concerne également une station radio de base qui est destinée à être utilisée dans un système de radio-communications comportant au moins un terminal synchronisé sur ladite station radio pour lui transmettre des trames radio, lesdites trames radio contenant des informations dont notamment un mot de préambule et arrivant à ladite station radio avec un retard de transmission variable inférieur à une certaine limite, et qui comporte un circuit d'estimation de la composante continue des trames radio reçues, cette estimation étant utilisée comme seuil de décision pour attribuer une valeur aux informations reçues.

L'invention a d'importantes applications en radio-communications, notamment pour des applications dans lesquelles les stations radio de base doivent couvrir une zone géographique relativement large, par exemple pour des applications de raccordement sans fil d'abonnés à un réseau public de télécommunications, notamment pour des systèmes de radio-communications basés sur la norme DECT. Dans ce cas en effet, la portée typique d'une station radio de base est 5 km, ce qui peut être considéré comme une longue portée en comparaison avec des applications avec portables mobiles à l'intérieur d'une zone, et pour lesquelles les stations radio de base ont une portée maximum de 200m.

Dans les applications longue portée, les temps de transmission peuvent donner lieu à un certain retard aller-retour dans la réception des données, et un temps de garde entre les différents créneaux temporels de la trame DECT est prévu à cet effet par la norme (norme ETS 300175-2 et ETS 300175-3). En cas de retard, la station de base risque d'être troublée par la réception de bruit ou d'interférences dues à des terminaux portables plus proches.

En particulier, dans le cas d'une réception FSK non cohérente, l'écart de fréquence entre les porteuses respectivement émises et reçues par la station radio de base et le terminal donne naissance à une composante continue non nulle dans les données démodulées en bande de base. Cette composante continue, qui est utilisée par le récepteur radio de la station radio de base comme seuil de décision pour attribuer une valeur aux informations reçues, varie avec l'écart de fréquence. Il est donc fondamental d'en obtenir une estimation précise pour chaque communication entre une station radio de base et un terminal. Or en cas de retard une telle estimation risque d'être faussée par les bruits et les signaux d'interférence.

Le but de la présente invention est d'apporter une solution à ce problème de façon à réaliser un système de radio-communications dans lequel les stations de bases supportent simultanément des applications à courte et longue portée.

Pour cela un système de radio-communications tel que défini dans le paragraphe introductif est caractérisé en ce que la station radio comporte des moyens pour déterminer ledit retard et des moyens de commande dudit circuit d'estimation de telle sorte que:
- tant que ledit retard est indéterminé, l'estimation soit effectuée pendant un intervalle de temps dont les bornes, définies à partir de ladite limite, correspondent aux instants minimum et maximum possibles de réception du mot de préambule,
- lorsque le retard est déterminé, l'estimation soit effectuée pendant le mot de préambule uniquement.

Ainsi, lorsqu'un terminal commence à émettre et que la distance qui le sépare de la station radio de base et donc le retard de transmission de la trame ne sont pas déterminés, l'estimation est effectuée sur toutes les informations reçues pendant l'intervalle de temps susceptible de contenir un mot de préambule. Par la suite lorsque le retard est connu, l'estimation n'est effectuée que sur le mot de préambule. La composante continue du signal reçu ne risque donc pas d'être extraite d'un bruit ou d'une interférence. De plus, l'estimation obtenue est figée à la fin du mot de préambule de façon à éviter toute déviation de l'estimation au cas où une longue séquence fixe de données serait transmise.

Dans un mode de réalisation avantageux de l'invention, chaque trame radio comporte de plus un mot de synchronisation dont la détection par la station radio permet notamment de déterminer ledit retard, et la station radio comporte des moyens de commande d'un circuit de détection de mots de synchronisation tels que:
- tant que ledit retard est indéterminé, ladite détection est activée pendant un intervalle de temps dont les bornes, définies à partir de ladite limite, correspondent aux instants minimum et maximum possibles de réception dudit mot de synchronisation, la détection étant désactivée dès qu'un mot de synchronisation a été détecté,
- lorsque le retard est déterminé, la détection est activée pendant un intervalle de temps restreint autour de la position de détection prévue du mot de synchronisation.

C'est donc la détection d'un mot de synchronisation dans une trame de données qui permet de déterminer ledit retard, ce qui permet d'obtenir une plus grande précision puisque le rythme des données reçues est alors bien déterminé.

La demande de brevet internationale WO 91/10305 décrit une méthode de synchronisation entre une station radio de base et une station radio mobile dans un système radio-mobile numérique. La demande européenne de brevet EP 0540 808 A2 décrit une méthode de synchronisation pour téléphone mobile GSM. Ces deux méthodes mettent en oeuvre d'abord une synchronisation grossière, puis une synchronisation fine.

D'autres caractéristiques, détails et avantages de l'invention apparaîtront dans la description qui va suivre en regard des dessins annexés qui sont donnés à titre d'exemple non limitatif et dans lesquels:
- la figure 1 est un schéma représentant un système de radio-communications selon l'invention,
- la figure 2 est une représentation de la trame DECT et de ses créneaux temporels,
- la figure 3 est une représentation schématique d'une station radio de base selon l'invention,
- la figure 4 est un diagramme d'état d'un automate de gestion de l'état déverrouillé ou verrouillé d'une station radio de base,
- la figure 5 représente des chronogrammes des signaux de commande des circuits de détection de mot de synchronisation et d'estimation de la composante continue du signal reçu.

L'invention va maintenant être décrite à partir du système de radio-communication DECT qui permet à une station radio, dite station de base, de communiquer avec une pluralité de terminaux à l'intérieur d'une zone géographique.

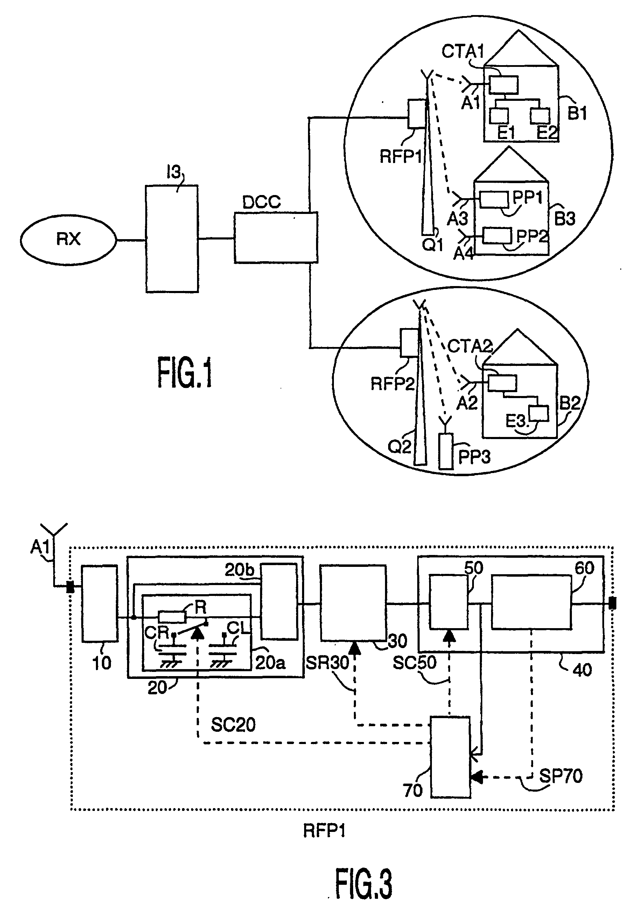

Un système de radio-communications selon l'invention est représenté sur la figure 1. D'une part il comporte deux terminaux fixes CTA1 et CTA2 installés dans deux bâtiments B1 et B2, munis chacun d'une antenne A1 et A2, et connectés à des équipements de transmission de parole (téléphone ou fac-similé par exemple) E1, E2 et E3 respectivement. Les terminaux PP1 et PP2 sont des terminaux fixes dédiés au transfert de données qui sont installés dans un bâtiment B3 et qui sont munis d'une antenne A3 et A4 respectivement. Le terminal PP1 supporte les services RNIS et le terminal PP2 est un adaptateur Ethernet destiné à être relié à un réseau local sans fil de données de type Ethernet. Le terminal PP3 enfin, est un terminal portable supportant les services parole.

D'autre part, un système de radio communication selon l'invention comporte deux stations radio de base RFP1 et RFP2 respectivement installées en haut de deux pylônes Q1 et Q2, et reliées à un concentrateur DCC. Ce concentrateur DCC est par ailleurs relié à un réseau RX par l'intermédiaire d'un module d'interface réseau I3. Ce réseau RX est par exemple un réseau public commuté pour des applications de transfert de parole et un réseau de type Ethernet pour des applications de transfert de données.

Une communication peut ainsi être établie entre la station radio de base RFP1 et les terminaux CTA1, PP1 et PP2 d'une part, et entre la station radio de base RFP2 et les terminaux CTA2 et PP3 d'autre part.

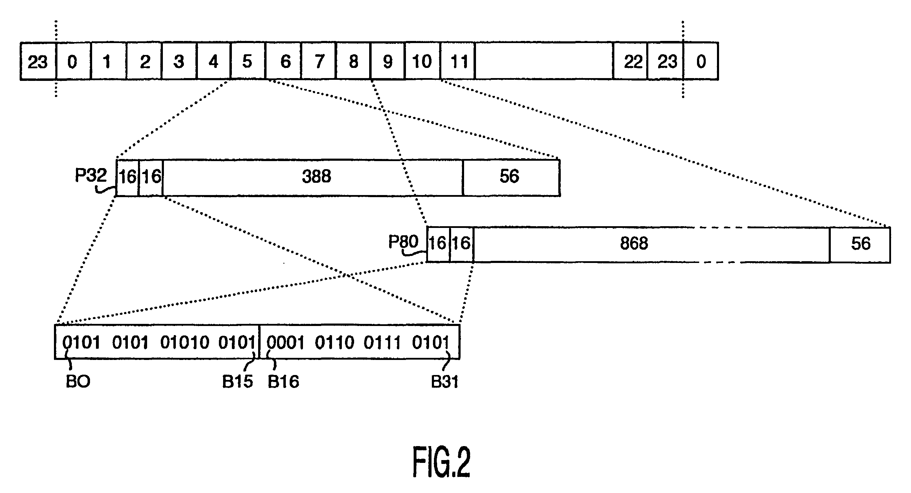

La norme DECT utilisant une architecture AMRT (Accès multiple à répartition dans le temps) multi-fréquences, chacune de ces communications occupe un créneau temporel dans la trame DECT. Comme l'indique la figure 2, la trame DECT comporte 24 créneaux temporels véhiculant chacun 480 bits. La norme DECT définit deux types de paquets appelés P32 et P80 susceptibles d'être émis par un terminal vers une station radio de base. Ils contiennent respectivement 424 bits et 904 bits, de telle sorte qu'un créneau temporel de la trame DECT comporte un paquet P32 ou un demi paquet P80, un temps de garde étant ménagé à la fin de chaque paquet pour absorber les retards de transmission. Chaque paquet DECT comporte un champ de synchronisation S de 32 bits suivi d'un champ de données de 388 bits pour des paquets P32 et de 868 bits pour des paquets P80, lui-même suivi de 4 bits de redondance pour la protection de ces données.

Le champ de synchronisation S se compose d'un premier mot de 16 bits constituant un mot de préambule P permettant de récupérer le rythme d'horloge de l'émetteur des données, et d'un second mot de 16 bits qui constitue un mot de synchronisation SW. Selon la norme DECT, dans le cas d'une communication émise par un terminal, ce champ S a la valeur suivante:
0101 0101 0101 0101 0001 0110 0111 0101,
soit en hexadécimal:
5555 1675.

Un temps de garde de 56 bits est ainsi ménagé à la fin de chaque paquet de façon à permettre un certain retard dans la transmission des données entre le terminal et la station radio de base. Dans la pratique, ce temps de garde ne peut pas être exploité au maximum et quelques bits (6 bits dans l'exemple qui va être décrit) doivent être réservés pour préparer la réception du créneau temporel suivant.

Au niveau de la base de temps, chaque terminal est esclave de la station radio de base avec laquelle il est en communication, c'est-à-dire qu'il utilise en émission une base de temps restituée à partir des trames reçues en provenance de cette station radio de base. Lorsqu'un terminal est synchronisé sur une station radio de base, il peut émettre un appel vers cette station dans l'un des créneaux temporels de la trame DECT. La station radio de base scrute en permanence les créneaux temporels en réception pour détecter d'éventuels mots de synchronisation, dans le but de se verrouiller sur le terminal émetteur.

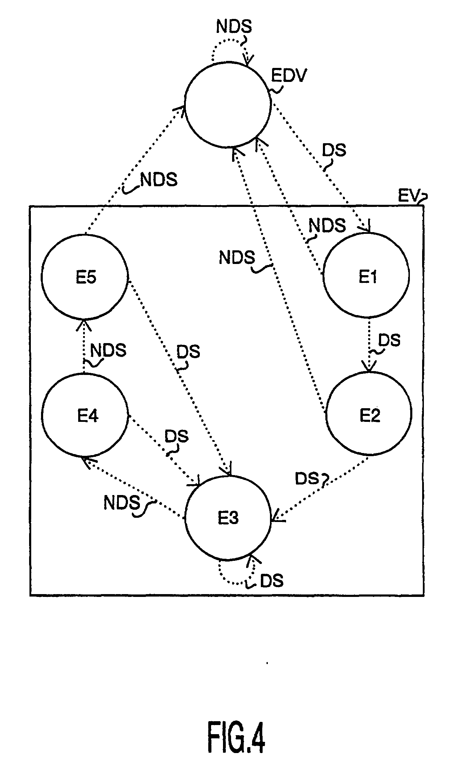

La figure 3 représente la partie réception d'une station radio de base RFP1 selon l'invention. Elle comporte un démodulateur radio FSK non cohérent 10 relié à une antenne A1 de façon à recevoir les signaux radio émis par les terminaux. Le signal démodulé issu de ce démodulateur est transmis à un circuit 20 de décision. Ce circuit 20 comporte un circuit 20a d'estimation de la composante continue du signal démodulé, et un circuit 20b qui compare le signal démodulé à la composante continue estimée de façon à prendre une décision sur les données reçues. Le signal régénéré issu du circuit 20b est ensuite transmis à un dispositif 30 de récupération de rythme et d'échantillonnage. Les données échantillonnées délivrées en sortie de ce dispositif 30 sont fournies à un module 40 de traitement des trames DECT, et notamment dans un premier temps à un circuit 50 de détection du mot de synchronisation S, puis à un circuit 60 de traitement de la trame DECT proprement dit.

Comme cela a été expliqué, les bits émis peuvent être reçus avec un certain retard. La distance entre le terminal émetteur et la station radio de base étant inconnue, ce retard n'est, à priori, pas déterminé. Lorsque la station radio est dans un état déverrouillé, la recherche du mot de synchronisation doit donc être effectuée entre l'instant minimal possible de réception du premier bit du mot de synchronisation SW et l'instant maximal possible de réception du dernier bit du mot de synchronisation SW. Comme on l'a vu, un retard de transmission de 50 bits est autorisé, et le mot SW de synchronisation occupe les bits B16 à B31 d'un créneau temporel. De plus, si l'on tient compte des tolérances autorisées par la norme DECT, l'instant d'arrivée de chaque créneau temporel est soumis à une gigue absolue de +/-6 bits. La recherche d'éventuels mots de synchronisation dans les créneaux temporels des trames reçues doit donc être effectuée du bit B10 au bit B88. En revanche, dès qu'un premier mot de synchronisation a été détecté dans un créneau temporel, ledit retard est déterminé et l'emplacement du mot de synchronisation pour le même créneau dans la trame suivante est connu à +/-3 bits près. Pour éviter toute perturbation par des signaux d'interférence ou de bruit, la recherche des mots de synchronisation doit alors être limitée à un intervalle de +/-3 bits autour de l'instant de détection du mot de synchronisation dudit créneau dans la trame précédente.

Dans la pratique, l'estimation de la composante continue du signal reçu est faite par le circuit 20a qui est un filtre passe-bas RC constitué d'une résistance R, d'un capacité lente CL et d'une capacité rapide CR. Lorsque la capacité rapide est sélectionnée, le circuit 20a estime la composante continue du signal reçu, et lorsque c'est la capacité lente qui est sélectionnée, on peut considérer que l'estimation est gelée. Le but de l'invention est de garantir que la composante continue du signal reçu ne soit pas estimée sur un signal d'interférence ou sur un bruit. Pour cela, cette estimation est faite sur le mot de préambule P du champ de synchronisation puis gelée pour la suite du créneau temporel de façon à éviter toute déviation dans le cas où une longue séquence fixe serait transmise. Lorsque la station de base est déverrouillée, l'estimation doit donc être effectuée entre les bits B474 et B72. Par la suite, après qu'un premier mot de synchronisation ait été détecté dans un créneau temporel, l'estimation doit avoir lieu pendant la durée du mot de préambule uniquement, l'emplacement du mot de préambule étant supposé être identique à celui du mot de préambule du même créneau dans la trame précédente. Dans la pratique, la gigue susceptible d'apparaître sur un créneau temporel d'une trame à une autre ne perturbe pas le résultat de l'estimation: il n'est donc pas nécessaire d'en tenir compte.

A cet effet, la station radio de base comporte également un automate de verrouillage 70 pour gérer l'état verrouillé ou déverrouillé de la station radio de base, et pour générer, en fonction de cet état, un signal de commande SC50 du circuit 50 de détection du mot de synchronisation, un signal de commande SC20 du circuit 20a d'estimation de la composante continue du signal reçu (ce signal permet de sélectionner soit la capacité lente soit la capacité rapide du circuit 20a), et une impulsion SR30 de réinitialisation du dispositif 30 de récupération de rythme, qui est émise lorsque le signal de commande SC20 du circuit d'estimation 20a est activé.

Dans le cas des paquets P80, la recherche du mot de synchronisation et l'estimation de la composante continue du signal reçu ne doivent être activées que pour les créneaux temporels qui correspondent au début d'un paquet, c'est-à-dire un créneau sur deux. Pour cela, le circuit de traitement de trame 60 émet un bit d'information SP70 vers l'automate 70 pour lui indiquer s'il s'agit d'un paquet P32 ou P80. Le circuit 60 extrait cette information d'un champ A contenu dans le champ de données des paquets reçus.

Le fonctionnement de l'automate de verrouillage 70 est maintenant décrit en se reportant à l'organigramme de la figure 4. Sur cette figure, les flèches portant les références DS et DSN indiquent respectivement la détection et la perte du mot de synchronisation SW. Les états EDV et EV de l'automate correspondent respectivement aux états déverrouillé et verrouillé de la station radio de base. L'état verrouillé EV se décompose en un sous-état verrouillé E3 et quatre sous-états intermédiaires E1, E2, E4 et E5. Partant de l'état déverrouillé EDV, il est nécessaire de détecter le mot de synchronisation SW trois fois consécutives pour passer dans le sous-état verrouillé E3. Inversement, partant du sous-état verrouillé E3, il est nécessaire de perdre le mot de synchronisation SW trois fois consécutives pour retourner à l'état déverrouillé EDV. Dans l'état EDV aucune erreur n'est tolérée pour la détection du mot de synchronisation. Dans l'état EV, une seule erreur est tolérée, c'est-à-dire qu'on considère que le mot de synchronisation est détecté même s'il comporte un bit erroné. Il est ainsi possible d'obtenir un bon compromis entre la stabilité de l'automate et la qualité de transmission.

Ainsi, partant de l'état EDV, l'automate passe dans un premier sous-état intermédiaire E1 s'il détecte le mot de synchronisation SW. Puis, partant de ce premier sous-état intermédiaire, il passe dans un second sous-état intermédiaire E2 s'il reconnaît le mot de synchronisation SW. Dans le cas contraire, l'automate retourne à l'état déverrouillé EDV. Partant du sous-état intermédiaire E2, l'automate passe au sous-état verrouillé E3 s'il détecte le mot de synchronisation SW. Dans le cas contraire, il retourne à l'état déverrouillé EDV. L'automate reste dans le sous-état verrouillé E3 tant qu'il détecte le mot de synchronisation dans les données reçues. Et dès qu'il perd un mot de synchronisation, il passe dans un troisième sous-état intermédiaire E4. Partant de ce troisième sous-état intermédiaire E4, l'automate retourne dans le sous-état de verrouillage E3 s'il détecte le mot de synchronisation. En revanche, s'il ne le détecte pas, il passe dans un quatrième sous-état intermédiaire E5. Partant de ce quatrième sous-état intermédiaire E5, l'automate retourne au sous-état verrouillé E3 s'il détecte le mot de synchronisation, et il passe à l'état déverrouillé EDV sinon.

Ainsi, l'état E_{N+1,P} de la station radio pour le créneau temporel P de la N+1^{ème} trame est fonction de l'état E_{N,P} dudit créneau P de la trame précédente N et de la détection ou de la non détection du mot de synchronisation S.

Lors de la N^{ème} réception du créneau temporel P, l'état de la station E_{N,P} et l'instant de détection du mot de synchronisation B_{N,P} sont enregistrés dans une mémoire du circuit 70 qui fonctionne ainsi en parallèle sur chacun des 24 créneaux temporels d'une trame. Ils sont utilisés pour générer les signaux de commande SC20_{N+1,P} et SC50_{N+1,P} et le signal de réinitialisation SR30_{N+1,P} du créneau temporel P de la trame suivante N+1. L'écriture de l'état E_{N,P} de la station radio et de l'instant de détection B_{N,P} du mot de synchronisation se fait au cours du créneau temporel P de la trame N, après la réception du mot de synchronisation, sur un front descendant du signal de commande SCM. La lecture de l'état E_{N,P} et de l'instant B_{N,P} de détection du mot de synchronisation se fait à la fin du créneau temporel P-1 de la trame N+1, sur un front montant d'un signal de commande SCM.

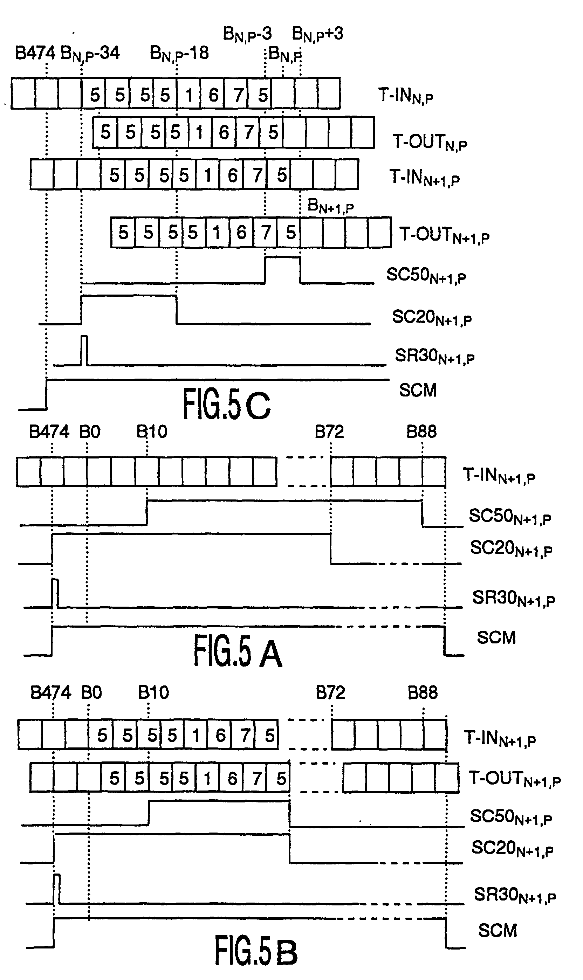

Les figures 5B et 5A représentent respectivement, pour des paquets P32, les signaux générés dans l'état EDV selon qu'il y a ou non détection du mot de synchronisation. La figure 5C représente, toujours pour des paquets P32, les signaux générés dans l'état EV. Les créneaux temporels T-IN_{N,P} et T-OUT_{N,P} correspondent à la N^{ème} réception du P^{ème} créneau temporel à l'entrée de la station radio de base et à l'entrée du circuit 50 de détection de mot de synchronisation respectivement. Le décalage de position qui apparaît sur la figure entre ces deux créneaux temporels est dû au temps de traversée du dispositif 30 de récupération de rythme; il est de l'ordre de 2 bits.

D'après la figure 5A, le signal SCM de commande de lecture/écriture de l'état E_{N,P} de la station et de l'instant B_{N,P} de détection du mot de synchronisation est activé au bit B474 et désactivé après le bit B88. Le signal SC50_{N+1,P} de commande du circuit de détection de mot de synchronisation est activé au bit B10 et désactivé au bit B88. Le signal SC20_{N+1,P} de commande du circuit d'estimation est activé au bit B474 et désactivé au bit B72. Et enfin l'impulsion SR30_{N+1,P} de réinitialisation du dispositif de récupération de rythme et d'échantillonnage est émise au bit B474.

D'après la figure 5B, dès que le mot de synchronisation a été détecté, c'est-à-dire immédiatement après la réception du dernier bit du mot de synchronisation, les signaux de commande SC20_{N+1,P} et SC50_{N+1,P} sont désactivés de façon à ce que la réception ne soit pas perturbée pour la fin du créneau.

D'après la figure 5C, le signal SCM de commande de lecture et d'écriture de l'état de la station est activé au bit B474 et désactivé après le bit B88. Le signal SC50_{N+1,P} de commande du circuit de détection de mot de synchronisation est activé 3 bits avant l'instant B_{N,P} de détection du mot de synchronisation du créneau temporel P de la trame précédente N et désactivé 3 bits après. Le signal SC20_{N+1,P} de commande du circuit d'estimation est activé au bit B_{N,P}-34 et désactivé au bit B_{N,P}-18. Et enfin l'impulsion SR30_{N+1,P} de réinitialisation du dispositif de récupération de rythme et d'échantillonnage est émise au bit B0.

Sur cette figure 5C, on a représenté le cas extrême où le créneau T-IN_{N+1,P} de la N+1^{ème} trame est décalé de +3 bits par rapport au créneau T-IN_{N,P} de la N^{ème} trame. Dans ce cas la désactivation du signal de commande SC50_{N+1,P} du circuit 50 correspond à l'instant B_{N+1,P} de détection du mot de synchronisation dans le créneau T-OUT_{N+1,P}.

Dans la pratique, les circuits 30, 50 et 70 sont réalisés au moyen de circuits logiques programmables, par exemple d'un circuit EPM 7128 fabriqué par Altera.

Le circuit 20a est avantageusement réalisé au moyen d'une résistance de 1kΩ, d'une capacité lente CL de 330nF et d'une capacité rapide CR de 10nF. D'une façon générale, il importe de choisir des capacités CL et CR dont les valeurs soient dans un rapport de l'ordre de 100.

Il va de soi que des modifications peuvent être apportées au mode de réalisation qui vient d'être décrit sans que l'on sorte du cadre de la présente invention. Notamment, l'invention n'est pas limitée à la norme DECT et d'autres normes de transmission à accès multiple à répartition dans le temps avec préambule et mot de synchronisation en début de paquet sont utilisables.

## Revendications

1. Système de radio-communications qui comporte au moins un terminal (CTA1, CTA2, PP1, PP2, PP3) synchronisé avec une station radio (RFP1, RFP2) pour lui transmettre des trames radio qui contiennent des informations dont notamment un mot de préambule (P) et qui arrivent à la station radio avec un retard inférieur à une certaine limite, ladite station radio comportant un circuit (20a) d'estimation de la composante continue des trames radio reçues, cette estimation étant utilisée comme seuil de décision par la station radio pour attribuer une valeur aux informations reçues,
**caractérisé en ce que** la station radio comporte des moyens (50, 70, SC50) pour déterminer ledit retard, et des moyens de commande (SC20) dudit circuit (20a) d'estimation de telle sorte que:
- tant que ledit retard est indéterminé, l'estimation soit effectuée pendant un intervalle de temps dont les bornes, définies à partir de ladite limite, correspondent aux instants minimum et maximum possibles de réception du mot de préambule,
- lorsque le retard est déterminé, l'estimation soit effectuée pendant le mot de préambule uniquement.

2. Système de radio-communications selon la revendication 1, **caractérisé en ce que** chaque trame radio comportant de plus un mot de synchronisation (S) dont la détection par la station radio permet notamment de déterminer ledit retard, la station radio comporte des moyens de commande (SC50) d'un circuit (50) de détection de mots de synchronisation tels que:
- tant que ledit retard est indéterminé, ladite détection est activée pendant un intervalle de temps dont les bornes, définies à partir de ladite limite, correspondent aux instants minimum et maximum possibles de réception dudit mot de synchronisation, la détection étant désactivée dès qu'un mot de synchronisation a été détecté,
- lorsque le retard est déterminé, la détection est activée pendant un intervalle de temps restreint autour de la position de détection prévue du mot de synchronisation.

3. Système de radio-communications selon la revendication 2, **caractérisé en ce que** les moyens de commande (SC20) du circuit d'estimation (20) permettent, lorsque le retard est indéterminé, de figer l'estimation de la composante continue des trames radio reçues dès qu'un mot de synchronisation a été détecté.

4. Système de radio-communications selon l'une des revendications 1 à 3, appliqué à la norme DECT.

5. Station radio qui est destinée à être utilisée dans un système de radio-communications comportant au moins un terminal (CTA1, CTA2, PP1, PP2, PP3) synchronisé sur ladite station radio (RFP1, RFP2) pour lui transmettre des trames radio, lesdites trames radio contenant des informations dont notamment un mot de préambule (P) et arrivant à ladite station radio avec un retard de transmission variable inférieur à une certaine limite, station radio comporte un circuit d'estimation (20a) de la composante continue des trames radio reçues, cette estimation étant utilisée comme seuil de décision pour attribuer une valeur aux informations reçues.
**caractérisé en ce qu'**elle comporte des moyens (50, 70, SC50) pour déterminer ledit retard et des moyens de commande (SC20) dudit circuit d'estimation (20a) de telle sorte que:
- tant que ledit retard est indéterminé, l'estimation soit effectuée pendant un intervalle de temps dont les bornes, définies à partir de ladite limite, correspondent aux instants minimum et maximum possibles de réception du mot de préambule (P),
- lorsque le retard est déterminé, l'estimation soit effectuée pendant le mot de préambule uniquement.

6. Station radio selon la revendication 5, **caractérisée en ce que**, chaque trame radio comportant de plus un mot de synchronisation (S) dont la détection par la station radio permet notamment de déterminer ledit retard, elle comporte des moyens de commande (SC50) d'un circuit (50) de détection de mots de synchronisation tels que:
- tant que ledit retard est indéterminé, ladite détection est activée pendant un intervalle de temps dont les bornes, définies à partir de ladite limite, correspondent aux instants minimum et maximum possibles de réception dudit mot de synchronisation, la détection étant désactivée dès qu'un mot de synchronisation a été détecté,
- lorsque le retard est déterminé, la détection est activée pendant un intervalle de temps restreint autour de la position de détection prévue du mot de synchronisation.

7. Station radio selon la revendication 6, **caractérisé en ce que** les moyens de commande du circuit d'estimation permettent, lorsque le retard est indéterminé, de figer l'estimation de la composante continue des trames radio reçues dès qu'un mot de synchronisation a été détecté.

8. Station radio selon l'une des revendications 5 à 7, **caractérisée en ce que** le circuit d'estimation de la composante continue du signal reçu est un filtre passe-bas qui contient une capacité dite capacité lente (CL) et une capacité dite capacité rapide (CR), et **en ce que** lesdits moyens de commande (SC20) permettent de sélectionner la capacité rapide (CR) pour effectuer une estimation, et la capacité lente (CL) pour figer cette estimation.

9. Station radio selon la revendication 8, **caractérisée en ce que** la capacité lente (CL) et la capacité rapide (CR) ont des valeurs dont le rapport est de l'ordre de quelques centaines.

10. Station radio selon l'une des revendications 5 à 9, appliquée à la norme DECT.

## Claims

1. A radio communication system comprising at least one terminal (CTA1,CTA2,PP1,PP2,PP3) synchronized with a radio station (RFP1,RFP2) for transmitting radio frames to the radio station which contain information streams among which notably a preamble word (P) and which arrive at the radio station with a delay that is smaller than a certain limit, wherein said radio station comprises an estimation circuit (20a) for estimating the DC component of the received radio frames, which estimation is used as a decision threshold by said radio station to assign a value to the information streams of the received radio frames, **characterized in that** the radio station comprises means (50,70,SC50) for determining said delay, and control means (SC20) for controlling said estimation circuit (20a), so that:
- as long as said delay is undetermined, the estimation is made during a time interval of which the time interval boundaries, defined on the basis of said certain limit, correspond to the minimum and maximum possible receiving instants of the preamble word,
- when the delay is determined, the estimation is made only during the preamble word.

2. A radio communication system as claimed in Claim 1, **characterized in that** each radio frame additionally contains a synchronization word (S) the detection by the radio station of which notably makes it particularly possible to determine said delay, and the radio station comprises control means (SC50) for controlling a synchronization word detection circuit (50), so that:
- as long as said delay is undetermined, said detection is activated during a time interval of which the boundaries, defined on the basis of said limit, correspond to the minimum and maximum instants at which said synchronization word can be received, whereas the detection is deactivated once a synchronization word has been detected,
- when the delay is determined, the detection is activated during a limited time interval around the provided detection position of the synchronization word.

3. A radio communication system as claimed in Claim 2, **characterized in that** the control means (SC20) of the estimation circuit (20) make it possible, when the delay is undetermined, to stop the estimation of the DC component of the received radio frames the moment a synchronization word has been detected.

4. A radio communication system as claimed in one of the Claims 1 to 3, applied to the DECT standard.

5. A radio station which is intended to be used in a radio communication system comprising at least one terminal (CTA1,CTA2,PP1,PP2,PP3) synchronized with the radio station (RFP1,RFP2) for transmitting radio frames to the radio station which contain information streams among which notably a preamble word (P) and which arrive at the radio station with a delay that is smaller than a certain limit, which radio station comprises an estimation circuit (20a) for estimating the DC component of the received radio frames, which estimation is used as a decision threshold by the radio station to assign a value to the received information streams, **characterized in that** the radio station comprises means (50,70,SC50) for determining said delay, and control means (SC20) for controlling said estimation circuit (20a), so that:
- as long as said delay is undetermined, the estimation is made during a time interval of which the boundaries, defined on the basis of said limit, correspond to the minimum and maximum possible receiving instants of the preamble word,
- when the delay is determined, the estimation is made only during the preamble word.

6. A radio station as claimed in Claim 5, **characterized in that** while each radio frame additionally contains a synchronization word (S) the detection by the radio station of which notably makes it possible to determine said delay, the radio station comprises control means (SC50) for controlling a synchronization word detection circuit (50), so that:
- as long as said delay is not determined, said detection is activated during a time interval of which the boundaries, defined on the basis of said limit, correspond to the minimum and maximum possible receiving instants of said synchronization word, while the detection is deactivated once a synchronization word has been detected,
- when the delay is determined, the detection is activated during a limited time interval around the provided detection position of the synchronization word.

7. A radio station as claimed in Claim 6, **characterized in that** the estimation circuit control means make it possible when the delay is undetermined to stop the estimation of the DC component of the received radio frames the moment a synchronization word has been detected.

8. A radio station as claimed in one of the Claims 5 to 7, **characterized in that** the estimation circuit for estimating the DC component of the received signal is a low-pass filter which includes a capacitor called slow capacitor (CL) and a capacitor called fast-acting capacitor (CR), and **in that** said control means (SC20) make it possible to select the fast-acting capacitor (CR) to making an estimation, and the slow capacitor (CL) to stop this estimation.

9. A radio station as claimed in Claim 8, **characterized in that** the slow capacitor (CL) and the fast-acting capacitor (CR) have values of which the ratio is of the order of several hundred.

10. A radio station as claimed in one of the Claims 5 to 9 applied to the DECT standard.

## Patentansprüche

1. Radiokommunikationsanordnung mit mindestens einem Terminal (CTA1, CTA2, PP1, PP2, PP3), synchronisiert mit einer Radiostation (RFP1, RFP2), um Radioraster an sie zu übertragen, die Informationen enthalten, wie insbesondere ein Vorwort (P), das mit einer Verzögerung unter einer bestimmten Grenze zur Radiostation gelangt, wobei die besagte Radiostation eine Schaltung (20a) zur Bewertung der kontinuierlichen Komponente der empfangenen Radioraster aufweist und diese Bewertung als Schwelle für die Entscheidung der Radiostation verwendet wird, um den erhaltenen Informationen einen Wert zuzuordnen,
**dadurch gekennzeichnet, daß** die Radiostation Verfahren (50, 70, SC50) enthält, um die besagte Verzögerung zu bestimmen, und Verfahren zur Steuerung (SC20) der besagten Bewertungsschaltung (20a), damit:
- solange die besagte Verzögerung unbestimmt ist, die Bewertung während eines Zeitintervalls stattfindet, dessen Bereiche, anhand der besagten Grenze definiert, den kleinstmöglichen und größtmöglichen Zeiträumen für den Empfang des Vorwortes entsprechen,
- wenn die Verzögerung bestimmt ist, die Bewertung nur während des Vorwortes vorgenommen wird.

2. Radiokommunikationsanordnung nach Anspruch 1, **dadurch gekennzeichnet, daß** jedes Radioraster zusätzlich ein Synchronisationswort (S) enthält, dessen Detektion von der Radiostation insbesondere die Bestimmung der besagten Verzögerung ermöglicht, und die Radiostation Steuerverfahren (SC50) für eine Schaltung (50) zur Detektion von Synchronisationswörtem enthält, damit:
- wenn die besagte Verzögerung unbestimmt ist, die besagte Detektion während eines Zeitintervalls aktiviert wird, dessen Bereiche, anhand der besagten Grenze definiert, den kleinstmöglichen und größtmöglichen Zeiträumen für den Empfang des Synchronisationswortes entsprechen, wobei die Detektion deaktiviert wird, sobald ein Synchronisationswort erkannt wurde,
- wenn die Verzögerung bestimmt ist, die Detektion in einem begrenzten Zeitintervall um die vorhergesehene Detektionsposition des Synchronisationswortes aktiviert wird.

3. Radiokommunikationsanordnung nach Anspruch 2, **dadurch gekennzeichnet, daß** die Steuerverfahren (SC20) der Bewertungsschaltung (20) es ermöglichen, wenn die Verzögerung unbestimmt ist, die Bewertung der kontinuierlichen Komponente der erhaltenen Radioraster festzuhalten, sobald ein Synchronisationswort erkannt wurde.

4. Radiokommunikationsanordnung nach einem der Ansprüche 1 bis 3, nach der DECT-Norm angewandt.

5. Radiostation zur Verwendung in einer Radiokommunikationsanordnung mit mindestens einem Terminal (CTA1, CTA2, PP1, PP2, PP3), synchronisiert mit der besagten Radiostation (RFP1, RFP2), um Radioraster an sie zu übertragen, die Informationen enthalten, wie insbesondere ein Vorwort (P), das mit einer variablen Verzögerung unter einer bestimmten Grenze zur Radiostation gelangt, wobei die Radiostation eine Schaltung (20a) zur Bewertung der kontinuierlichen Komponente der empfangenen Radioraster aufweist und diese Bewertung als Schwelle für die Entscheidung verwendet wird, um den erhaltenen Informationen einen Wert zuzuordnen,
**dadurch gekennzeichnet, daß** sie Verfahren (50, 70, SC50) enthält, um die besagte Verzögerung zu bestimmen, und Verfahren zur Steuerung (SC20) der besagten Bewertungsschaltung (20a), damit:
- solange die besagte Verzögerung unbestimmt ist, die Bewertung während eines Zeitintervalls stattfindet, dessen Bereiche, anhand der besagten Grenze definiert, den kleinstmöglichen und größtmöglichen Zeiträumen für den Empfang des Vorwortes (P) entsprechen,
- wenn die Verzögerung bestimmt ist, die Bewertung nur während des Vorwortes vorgenommen wird.

6. Radiostation Anspruch 5, **dadurch gekennzeichnet, daß** jedes Radioraster zusätzlich ein Synchronisationswort (S) enthält, dessen Detektion von der Radiostation insbesondere die Bestimmung der besagten Verzögerung ermöglicht, und sie Steuerverfahren (SC50) für eine Schaltung (50) zur Detektion von Synchronisationswörtern enthält, damit:
- wenn die besagte Verzögerung unbestimmt ist, die besagte Detektion während eines Zeitintervalls aktiviert wird, dessen Bereiche, anhand der besagten Grenze definiert, den kleinstmöglichen und größtmöglichen Zeiträumen für den Empfang des Synchronisationswortes entsprechen, wobei die Detektion deaktiviert wird, sobald ein Synchronisationswort erkannt wurde,
- wenn die Verzögerung bestimmt ist, die Detektion in einem begrenzten Zeitintervall um die vorhergesehene Detektionsposition des Synchronisationswortes aktiviert wird.

7. Radiostation nach Anspruch 6, **dadurch gekennzeichnet, daß** die Steuerverfahren der Bewertungsschaltung es ermöglichen, wenn die Verzögerung unbestimmt ist, die Bewertung der kontinuierlichen Komponente der erhaltenen Radioraster festzuhalten, sobald ein Synchronisationswort erkannt wurde.

8. Radiostation nach einem der Ansprüche 5 bis 7, **dadurch gekennzeichnet, daß** die Schaltung zur Bewertung der kontinuierlichen Komponente des erhaltenen Signals ein Tiefpaßfilter ist, der eine sogenannte langsame Kapazität (CL) und eine sogenannte schnelle Kapazität (CR) enthält, und daß die besagten Steuermittel (SC20) es ermöglichen, die schnelle Kapazität (CR) auszuwählen, um eine Bewertung vorzunehmen, und die langsame Kapazität (CL), um diese Bewertung festzuhalten.

9. Radiostation nach Anspruch 8, **dadurch gekennzeichnet, daß** die langsame Kapazität (CL) und die schnelle Kapazität (CR) Werte haben, deren Verhältnis einer dreistelligen Größenordnung entspricht.

10. Radiostation nach einem der Ansprüche 5 bis 9, nach der DECT-Norm angewandt.
